# EUROPÄISCHE PATENTANMELDUNG

(11) **EP 2 487 899 A2**
(43) Veröffentlichungstag der Anmeldung: **15.08.2012**
(21) Anmeldenummer: 11008533.9
(22) Anmeldetag: 30.03.2006
(51) Int. Cl.: H04N 5/913, H04N 21/4408

(54) **Consumer-Electronic-Gerät zum Empfangen eines digitalen Eingangsdatenflusses von kodierten digitalen Ton- und/oder Bildsignalen**

(30) Priorität: 15.07.2005 DE 102005033285
(62) Teilanmeldung aus: 06723851.9
(71) Anmelder: Institut für Rundfunktechnik GmbH, 80939 München (DE)
(72) Erfinder: Sedlmeyer, Robert, 85737 Ismaning (DE)
(74) Vertreter: Konle, Tilmar

(57) **Zusammenfassung**

Um ein Consumer-Electronic-Gerät zu schaffen, welches innerhalb eines einheitlichen Systems zum Übertragen und Empfangen von verschlüsselten oder unverschlüsselten Ton- und/oder Bildinhalten die Forderung des öffentlich-rechtlichen Rundfunks und von "Free-to-Air"-Progammanbietern nach unverschlüsselter Bearbeitung und/oder Wiedergabe und/oder Speicherung von frei zugänglichen Inhalten beim Endnutzer erfüllt, wird vorgeschlagen, dass der digitale Eingangs-Datenfluss zusätzlich Nutzungsberechtigungsinformation (2) enthält und das Consumer-Electronic-Gerät enthält (a)- eine Auswerter-Einheit (405) zum Ableiten der Nutzungsberechtigungsinformation (2) aus dem digitalen Eingangs-Datenfluss, (b)eine Detektor-Einheit (405, 401) zum Detektieren, ob die digitalen Signale im digitalen Eingangs-Datenfluss verschlüsselt sind oder nicht, (c) eine Entschlüssler-Einheit (401) zum Entschlüsseln der digitalen Signale als Antwort auf die Nutzungsberechtigungsinformation (2) zum Erzeugen der kodierten digitalen Signale, und (d) eine Dekodiereinheit (402) zum Dekodieren der kodierten digitalen Signale zum Erzeugen der Bild- und/oder Tonsignale. Der digitale Eingangs -Datenfluss enthält zusätzlich ein Anweisungs-Signal (3) und die Auswerter-Einheit (405) ist zusätzlich ausgebildet zum Auswerten dieses Anweisungs-Signals (3) aus dem digitalen Eingangs-Datenfluss. Zusätzlich enthält das Consumer-Electronic-Gerät eine Verschlüssler-Einheit (403) zum Verschlüsseln der kodierten digitalen Signale der Bild- und/oder Toninformation aus dem digitalen Eingangs-Datenfluss, das möglicherweise verschlüsselt und dekodiert war. Für den Fall, dass der digitale Eingangs-Datenfluss verschlüsselte kodierte digitale Signale enthält und das Anweisungs-Signal in Form eines "Nicht-Verschlüsseln"-Typs (Anweisungssignal 3 anwesend) vorliegt, ist die Verschlüssler-Einheit (403) ausgebildet zum unverschlüsselten Weiterleiten der kodierten digitalen Signale der Bild- und/oder Toninformation als Antwort auf das "Nicht-Verschlüsseln"- Anweisungs-Signal (Anweisungssignal 3 anwesend), und damit zum Erzeugen eines digitalen Ausgangs-Datenflusses von nichtverschlüsselten kodierten digitalen Signalen von Bild- und/oder Toninformation.

## Beschreibung

Die Erfindung bezieht sich auf ein Consumer-Electronic-Gerät gemäß dem Oberbegriff des Patentanspruchs 1.

Das illegale Kopieren von bespielten Aufzeichnungsträgern mit geschützten Ton-und/oder Bildinhalten mit Hilfe von Personal Computer-Programmen, hat zu einer Reihe von technischen Abwehrmaßnahmen geführt, welche das illegale Kopieren erschweren oder verhindern. Im Unterschied zu solchen Copy-Protect-Systemen ermöglichen "Content Protection und Copy Management" (CPCM) die Nutzung eines Aufzeichnungsträgers von Inhalten nur zu bestimmten Lizenz-Bedingungen. Der Grundgedanke von CPCM-Systemen besteht darin, für jede erlaubte Nutzung seines Inhaltes eine gesonderte Signalisierung vorzugeben, welche den Bild- und/oder Tonsignalen hinzugefügt und von geeigneten Empfängern ausgewertet werden. Die Vorstellungen von US-amerikanischen Produzenten von Bild- und/oder Toninhalten gehen auf bis zu 55 unterschiedliche Signalisierungen, welche nicht nur das Kopieren von Inhalten, sondern lediglich die Operation, die mit dem Inhalt durchgeführt wird, bis ins kleinste Detail das räumliche Nutzen von Inhalten nur in "Authorized Domains" (also berechtigten Gebieten, z.B. nur im Heim des berechtigten Nutzers) kontrollieren.

Die Umsetzung dieser umfangreichen Signalisierungen in Consumer-Electronic-Geräten ist indessen aufwendig und wird voraussichtlich zu einer Verteuerung führen. Entsprechende Verfahren werden dabei nicht nur in Consumer-Electronic-Geräten, sondern auch in zukünftigen PCs realisiert werden. Im Einsatz sind bereits so genannte Conditional-Access-(CA) Systeme, mit denen Pay-TV-Anbieter den Zugang zu verschlüsselt übertragenen Bild- und/oder Toninhalten über Smart-Cards kontrolliert wird. Diese sind für die erweiterten Forderungen an CPCM-Systeme allein jedoch unzureichend und müssen entsprechend erweitert werden. Sobald die per Smart-Card entschlüsselten Inhalte an einem Geräte-Ausgang bereit gestellt sind, können die Inhalte bei ausschließlicher Verwendung von CA-Systemen ungehindert wiedergegeben, bearbeitet oder gespeichert werden. Eine Erweiterung hierzu ist das so genannte Macrovision-Signal, welches nur die Wiedergabe einer Pay-TV-Sendung auf dem Bildschirm eines Fernsehempfängers, nicht aber die Aufzeichnung auf einem Videorecorder gestatten soll.

Andererseits ist ein CPCM-System, welches ausschließlich auf Verschlüsselung aufbaut, für den öffentlich-rechtlichen Rundfunk sowie für "Free-to-Air"-Rundfunkprogrammanbieter prinzipiell inakzeptabel. Die ausgestrahlten Inhalte dieser Rundfunkanbieter sollen auch in Zukunft unverschlüsselt bleiben und ohne Beschränkungen aufgezeichnet werden können. Auch die Übergabe auf Schnittstellen zwischen verschiedenen Wiedergabegeräten im Heim des Konsumenten soll unverschlüsselt erfolgen. Indessen ist bei drahtlosen Systemen wie Wireless-LAN eine Verschlüsselung der übertragenen Inhalte im Heim des Konsumenten sinnvoll, um ein Abhören durch Nachbarn zu verhindern. Mit Hilfe solcher drahtloser Heim-Systeme werden insbesondere PC's mit Internet-Zugang und Set-Top-Boxen für Rundfunkempfang mit anderen Geräten im Heim des Konsumenten ohne Verkabelungsaufwand vernetzt.

Die Aufgabe der Erfindung besteht darin, ein Consumer-Electronic-Gerät zu schaffen, welches innerhalb eines einheitlichen Systems zum Übertragen und Empfangen von verschlüsselten oder unverschlüsselten Ton- und/oder Bildsignalen die Forderung des öffentlich-rechtlichen Rundfunks und von "Free-to-Air"-Progammanbietern nach unverschlüsselter Bearbeitung und/oder Wiedergabe und/oder Speicherung von frei zugänglichen Inhalten beim Endnutzer erfüllt.

Diese Aufgabe wird bei einem Consumer-Electronic-Gerät erfindungsgemäß durch die Merkmale der nebengeordneten Patentansprüche 1 oder 2 gelöst.

Vorteilhafte Weiterbildungen des erfindungsgemäßen Consumer-Electronic-Gerätes nach Anspruch 1 oder 2 ergeben sich aus dem Unteranspruch 3.

Die Erfindung beruht auf der Überlegung, solchen Bild- und/oder Tonsignalen, welche dem Endnutzer unverschlüsselt zur freien Verfügung stehen sollen, mit einer speziellen Nutzungsberechtigungsinformation zu versehen, welche auch bei mehrfacher Verschlüsselung und Entschlüsselung auf ihrem Verbreitungsweg an den Bild- und/oder Tonsignalen "klebt", oder durch eine logische Verknüpfung mit ihr verbunden ist, selbst wenn sie unabhängig von den Ton- und/oder Bildsignalen übertragen/gespeichert wird, und an verschiedenen Stellen, wo dies möglich und sinnvoll ist, zumindest aber am Ende des Verbreitungsweges beim Endnutzer eine Entschlüsselung der Bild- und/oder Tonsignale auslöst, falls eine Verschlüsselung vorliegt.

Die Erfindung wird nachstehend an Hand von Ausführungsbeispielen in den Zeichnungen näher erläutert. Es zeigt:
- Fig.1: ein Blockschaltbild eines Consumer-Electronic-Gerätes nach der Erfindung;
- Fig. 2: ein Blockschaltbild eines im Heim eines Endnutzers vorhandenen Inselnetzes zum Empfangen von verschlüsselten oder unverschlüsselten Bild- und/oder Tonsignalen und zu deren Weitergabe an ein Consumer-Electronic-Gerät nach Fig. 1, und
- Fig. 3: ein Blockschaltbild einer Kaskade von Empfängern und Speichern zur Weiterleitung von Bild- und/oder Tonsignalen, die aus beliebigen Übertragungsnetzen empfangen werden.

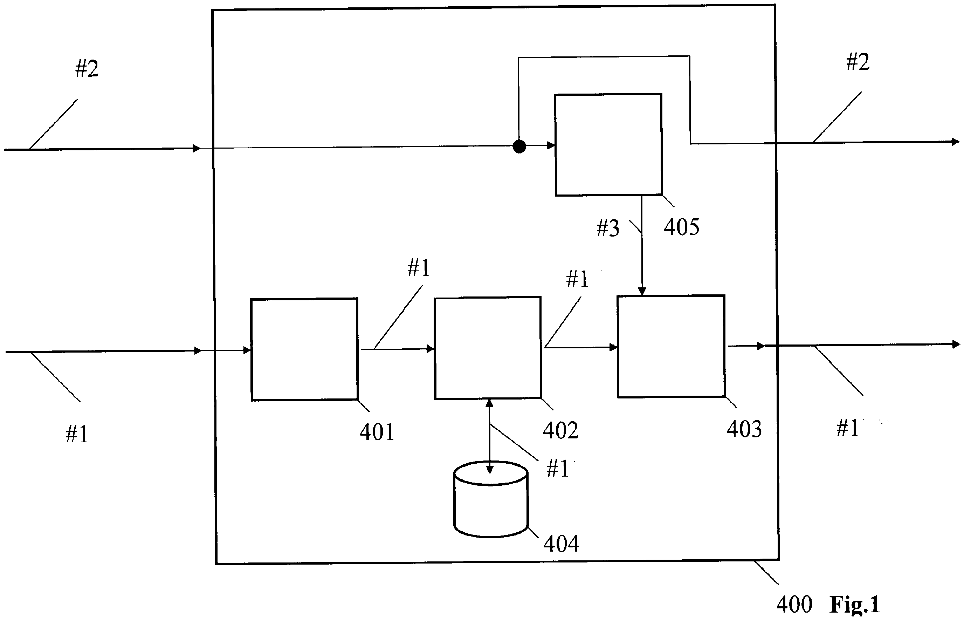

Das in Fig. 1 dargestellte Consumer-Electronic-Gerät 400 empfängt aus einem nicht gezeigten Übertragungsnetz Bild- und/oder Tonsignale 1 in Form eines digitalen Eingangs-Datenflusses in verschlüsselter oder unverschlüsselter Form sowie eine Nutzungsberechtigungsinformation 2. Die Nutzungsberechtigungsinformation 2 bleibt erfindungsgemäß den Bild- und/oder Tonsignalen 1 stets hinzugefügt, oder durch geeignete Maßnahmen logisch verknüpft, selbst wenn sie physikalisch getrennt von den Bild- und/oder Tonsignalen 1 mit übertragen wird, unabhängig davon, ob die Bild- und/oder Tonsignale 1 auf ihrem Übertragungsweg zu einer Wiedergabe- oder Speichereinrichtung des Endnutzers verschlüsselt oder entschlüsselt werden. Die Nutzungsberechtigungsinformation 2 löst zumindest am Ende jeder Übertragung oder Weiterübertragung eine Entschlüsselung der Bild- und/oder Tonsignale im Falle seiner Verschlüsselung aus.

Im Beispielsfalle von Fig. 1 wird ein verschlüsselter digitaler Eingangs-Datenfluss des Gerätes 400 einer dort vorgesehenen Entschlüssler-Einheit 401 zugeführt und dort entschlüsselt. Ein unverschlüsselter digitaler Eingangs-Datenfluss wird durch die Entschlüssler-Einheit 401 unverändert durchgeschleift. Der unverschlüsselte digitale Eingangs-Datenfluss am Ausgang der Entschlüssler-Einheit 401 wird in einer nachfolgenden Stufe 402 bearbeitet und gegebenenfalls in einem Speicher 404 abgelegt. Der bearbeitete digitale Eingangs-Datenfluss wird einer Verschlüssler-Einheit 403 zugeführt, welche über einen Steuereingang mit einer Auswerter-Einheit 405 verbunden ist. Die Auswerter-Einheit 405 wertet die Gesamtheit der übertragenen Nutzungsberechtigungsinformation 2 aus und filtert eine dort gegebenenfalls enthaltene Anweisung 3, nicht zu verschlüsseln, heraus. Die Anweisung 3 wird an die Verschlüssler-Einheit 403 weitergeleitet und verhindert dort eine Verschlüsselung. Die Verschlüssler-Einheit 403 verschlüsselt somit den bearbeiteten digitalen Eingangs-Datenfluss nur dann, wenn in der Nutzungsberechtigungsinformation 2 die Anweisung 3 nicht vorhanden ist. Der Ausgang der Verschlüssler-Einheit 403 bildet den Ausgang des Gerätes 400, dem die Nutzungsberechtigungsinformation 2 wiederum hinzugefügt wird.

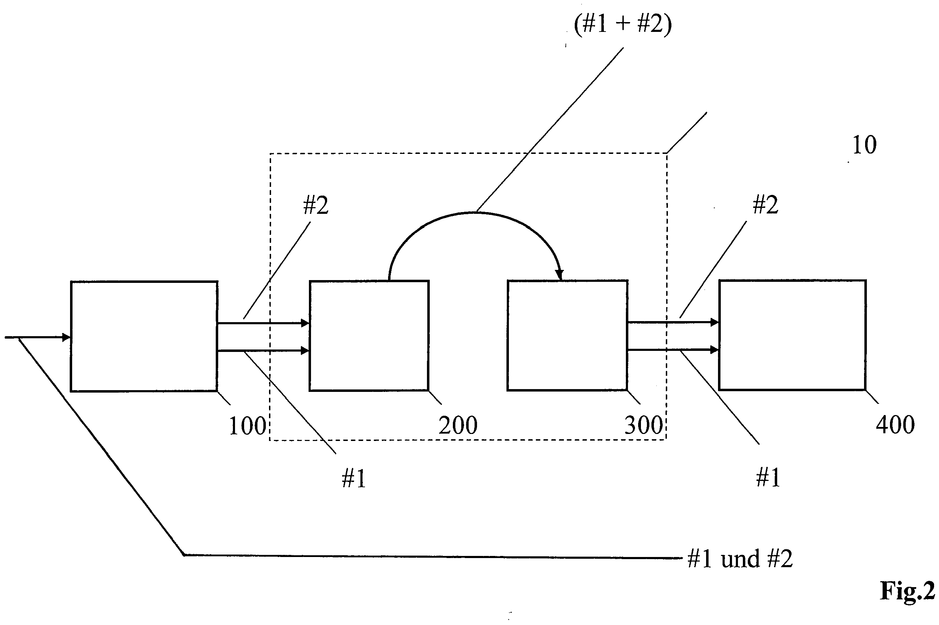

In Fig. 2 ist ein drahtloses Inselnetz 10 im Heim eines Endnutzers gezeigt, welches einen W-LAN-Sender 200 und einen W-LAN-Empfänger 300 aufweist. Der W-LAN-Sender 200 ist über eine Schnittstelle mit einer Eingangsstufe 100 gekoppelt, welche Bild- und/oder Tonsignale 1 in Form eines digitalen Eingangs-Datenflusses in verschlüsselter oder unverschlüsselter Form zusammen mit einer Nutzungsberechtigungsinformation 2 aus einem beliebigen Übertragungsnetz, beispielsweise dem Internet oder einem Rundfunknetz, empfängt. Die Eingangsstufe 100 enthält einen primären Empfänger und gegebenenfalls eine Entschlüssler-Einheit 100.

Der W-LAN-Sender 200 leitet den digitalen Eingangs-Datenfluss drahtlos in verschlüsselter Form an den W-LAN-Empfänger 300 weiter. Der W-LAN-Empfänger 300 ist über eine weitere Schnittstelle mit einem Consumer-Eletronic-Gerät 400 verbunden, das gemäß Fig. 1 ausgebildet sein kann. Wesentlich ist, dass die Nutzungsberechtigungsinformation 2 durch das Inselnetz 10 hindurchgeschleift wird oder durch geeignete Maßnahmen logisch verknüpft bleibt, selbst wenn sie physikalisch getrennt von den Bild- und/oder Tonsignalen 1 mit übertragen wird, so dass die Nutzungsberechtigungsinformation 2 an das Consumer-Electronic-Gerät 400 zusammen mit dem weiter-übertragenen Signal 1 weitergeleitet wird.

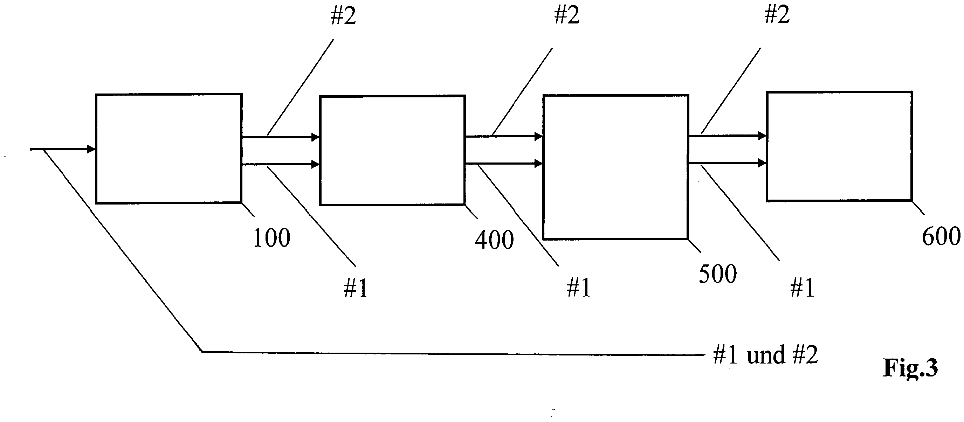

In Fig. 3 ist das Prinzip der Verkoppelung des Bild- und/oder Toninhaltes 1 mit der Nutzungsberechtigungsinformation 2 an Hand einer Kaskade von Consumer-Electronic-Geräten 400, 500 und 600 mit Entschlüssler-Einheiten und Verschlüssler-Einheiten veranschaulicht. An dem Ausgang der Eingangsstufe 100 sowie jedes Consumer-Electronic-Gerätes 400 und 500 ist das Bild-und/oder Tonsignal 1 zusammen mit der Nutzungsberechtigungsinformation 2 vorhanden, gleichgültig, ob innerhalb des jeweiligen Gerätes 100, 400 bzw. 500 eine Entschlüsselung und/oder Verschlüsselung erfolgt oder nicht. Das letzte Gerät 600 in der dargestellten Kaskade von Geräten empfängt somit das Bild-und/oder Tonsignal 1 zusammen mit der Nutzungsberechtigungsinformation 2, welche in dem Gerät 600 eine Entschlüsslung des Bild- und/oder Tonsignales 1 auslöst, falls das Bild- und/oder Tonsignal 1 zwischenzeitlich irgendwo verschlüsselt wurde.

## Patentansprüche

1. Consumer-Electronic-Gerät zum Empfangen eines digitalen Eingangs- Datenflusses (1) von kodierten digitalen Bild- und/oder Tonsignalen, die gegebenenfalls verschlüsselt sind, bevor sie übertragen sind, wobei der digitale Eingangs-Datenfluss zusätzlich Nutzungsberechtigungsinformation (2) enthält, wobei das Consumer-Electronic-Gerät folgende Merkmale aufweist:
- eine Auswerter-Einheit (405) zum Ableiten der Nutzungsberechtigungsinformation (2) aus dem digitalen Eingangs- Datenfluss,
- eine Detektor-Einheit (405, 401) zum Detektieren, ob die digitalen Signale im digitalen Eingangs-Datenfluss verschlüsselt sind oder nicht,
- eine Entschlüssler-Einheit (401) zum Entschlüsseln der digitalen Signale als Antwort auf die Nutzungsberechtigungsinformation zum Erzeugen der kodierten digitalen Signale,
- eine Dekodiereinheit (402) zum Dekodieren der kodierten digitalen Signale zum Erzeugen der Bild- und/oder Tonsignale,
- ein erster Ausgang zum Abgeben der digitalen Bild- und/oder Tonsignale (1),
wobei die Entschlüssler-Einheit (401) ausgebildet ist zum Entschlüsseln der verschlüsselten kodierten digitalen Signale für den Fall, dass die abgeleitete Nutzungsberechtigungsinformation (2) die Entschlüsselung der verschlüsselten kodierten digitalen Signale in entschlüsselte kodierte Signale zulässt, und wobei sie ausgebildet ist zum Verhindern der Entschlüsselung der verschlüsselten kodierten digitalen Signale für den Fall, dass die abgeleitete Nutzungsberechtigungsinformation (2) die Entschlüsselung der verschlüsselten kodierten digitalen Signale in entschlüsselte kodierte Signale nicht zulässt,
**dadurch gekennzeichnet,**
**dass** der digitale Eingangs -Datenfluss zusätzlich ein Anweisungs-Signal (3) enthält und die Auswerter-Einheit (405) zusätzlich ausgebildet ist zum Auswerten dieses Anweisungs-Signals (3) aus dem digitalen Eingangs-Datenfluss,
**dass** das Consumer-Electronic-Gerät zusätzlich enthält
- eine Verschlüssler-Einheit (403) zum Verschlüsseln der kodierten digitalen Signale der Bild- und/oder Toninformation aus dem Eingangs-Digitalen-Datenfluss,
und **dass**, für den Fall, dass der digitale Eingangs-Datenfluss nichtverschlüsselte kodierte digitale Signale enthält und das Anweisungs-Signal (3) in Form eines "Verschlüsseln-Erlaubt"-Typs (Anweisungssignal 3 abwesend) vorliegt, die Verschlüssler-Einheit (403) ausgebildet ist zum Verschlüsseln der kodierten digitalen Signale der Bild- und/oder Toninformation als Antwort auf das "Verschlüsseln-Erlaubt"- Anweisungs-Signal (Anweisungssignal 3 abwesend) zum Erzeugen eines digitalen Ausgangs--Datenflusses,
und **dass** das Consumer-Electronic-Gerät zusätzlich einen zweiten Ausgang enthält zur Abgabe dieses Ausgangs-Digitalen-Datenflusses.

2. Consumer-Electronic-Gerät zum Empfangen eines digitalen Eingangs-Datenflusses (1) von kodierten digitalen Bild- und/oder Tonsignalen, die gegebenenfalls verschlüsselt sind, bevor sie übertragen sind, wobei der digitale Eingangs-Datenfluss zusätzlich Nutzungsberechtigungsinformation (2) enthält, wobei das Consumer-Electronic-Gerät folgende Merkmale aufweist:
- eine Auswerter-Einheit (405) zum Ableiten der Nutzungsberechtigungsinformation (2) aus dem digitalen Eingangs-Datenfluss,
- eine Detektor-Einheit (405, 401) zum Detektieren, ob die digitalen Signale im digitalen Eingangs-Datenfluss verschlüsselt sind oder nicht,
- eine Entschlüssler-Einheit (401) zum Entschlüsseln der digitalen Signale als Antwort auf die Nutzungsberechtigungsinformation (2) zum Erzeugen der kodierten digitalen Signale,
- eine Dekodiereinheit (402) zum Dekodieren der kodierten digitalen Signale zum Erzeugen der Bild- und/oder Tonsignale,
- ein erster Ausgang zum Abgeben der digitalen Bild- und/oder Tonsignale (1),
wobei die Entschlüssler-Einheit (401) ausgebildet ist zum Entschlüsseln der verschlüsselten kodierten digitalen Signale für den Fall, dass die abgeleitete Nutzungsberechtigungsinformation (2) die Entschlüsselung der verschlüsselten kodierten digitalen Signale in entschlüsselte kodierte Signale zulässt, und wobei sie ausgebildet ist zum Verhindern der Entschlüsselung der verschlüsselten kodierten digitalen Signale für den Fall, dass die abgeleitete Nutzungsberechtigungsinformation (2) die Entschlüsselung der verschlüsselten kodierten digitalen Signale in entschlüsselte kodierte Signale nicht zulässt,
**dadurch gekennzeichnet,**
**dass** der digitale Eingangs -Datenfluss zusätzlich ein Anweisungs-Signal (3) enthält und die Auswerter-Einheit (405) zusätzlich ausgebildet ist zum Auswerten dieses Anweisungs-Signals (3) aus dem digitalen Eingangs-Datenfluss,
**dass** das Consumer-Electronic-Gerät zusätzlich enthält
- eine Verschlüssler-Einheit (403) zum Verschlüsseln der kodierten digitalen Signale der Bild- und/oder Toninformation aus dem digitalen Eingangs-Datenfluss, das möglicherweise verschlüsselt und dekodiert war in der Entschlüssler-Einheit (401) beziehungsweise Dekodiereinheit (402),
und **dass**, für den Fall, dass der digitale Eingangs-Datenfluss verschlüsselte kodierte digitale Signale enthält und das Anweisungs-Signal in Form eines "Nicht-Verschlüsseln"-Typs (Anweisungssignal 3 anwesend) vorliegt, die Verschlüssler-Einheit (403) ausgebildet ist zum unverschlüsselten Weiterleiten der kodierten digitalen Signale der Bild- und/oder Toninformation als Antwort auf das "Nicht-Verschlüsseln"- Anweisungs-Signal (Anweisungssignal 3 anwesend), zum Erzeugen eines digitalen Ausgangs-Datenflusses von nichtverschlüsselten kodierten digitalen Signalen von Bild- und/oder Toninformation,
und **dass** das Consumer-Electronic-Gerät zusätzlich einen zweiten Ausgang enthält zur Abgabe dieses digitalen Ausgangs- Datenflusses (1, 2).

3. Consumer-Electronic-Gerät gemäss Anspruch 1 oder 2, **dadurch gekennzeichnet, dass** das Gerät zusätzlich ausgebildet ist zum Einfügen des Anweisungssignals (3) in den digitalen Ausgangs-Datenfluss vor der Abgabe des digitalen Ausgangs-Datenflusses an den zweiten Ausgang.
